# EUROPEAN PATENT SPECIFICATION

(11) **EP 2 454 496 B1**
(45) Date of publication and mention of the grant of the patent: **01.04.2020**
(21) Application number: 10799480.8
(22) Date of filing: 14.07.2010
(51) Int. Cl.: F16B 33/00, C25D 3/00, B05D 1/18, C23C 22/60, C23C 22/62, C23C 22/64, C23C 22/66

(54) **MOUNTING SCREW AND ITS MANUFACTURING METHOD**
BEFESTIGUNGSSCHRAUBE UND IHRE HERSTELLUNGSVERFAHREN
VIS DE FIXATION ET SON PROCÉDÉ DE FABRICATION

(30) Priority: 17.07.2009 FI 20090276 U
(43) Date of publication of application: 23.05.2012
(73) Proprietor: Kingi Oy, 01900 Nurmijärvi (FI)
(72) Inventor: KINNUNEN, Jorma, 13430 Hämeenlinna (FI)
(74) Representative: Kolster Oy Ab
(86) International application number: PCT/FI2010/050594
(87) International publication number: WO 2011/007050

(56) References cited:
- WO-A1-2006/110756
- CA-A1- 2 306 356
- DE-A1- 10 232 127
- DE-U1- 9 106 003
- US-A- 5 178 903
- US-A1- 2005 276 989
- US-A1- 2005 287 376
- US-A1- 2006 278 124
- US-A1- 2006 278 124
- US-A1- 2007 196 632
- US-B1- 6 274 200

## Description

### BACKGROUND OF THE INVENTION

The invention relates to a mounting screw comprising a metallic basic body part, the mounting screw being at least partly painted, the mounting screw further comprising a cathodic protective layer arranged on the basic part.

Further, the invention relates to a method for manufacturing a mounting screw.

Previously, surface treatments of metal articles are known from US 2006/278124 A1, US 2007/196632 A1, WO 2006/110756 A1 and DE 91 06 003 U, for instance. Paint-coated mounting screws are known, having carbon steel as their basic material, i.e. as the material of the basic body part. The products to be mounted are sheet metal products, such as profiles, wall cassettes, insulating panels, roofing sheets and sheet metal claddings. Their material is most often industrially painted and zinc-coated carbon steel sheet metal but also other sheet metal materials are fastened with a paint-coated mounting screw.

Frequently, a washer is fastened to the mounting screw. In painted mounting screws, the washer is fastened to the screw before painting and its upper surface and most often also its sides become painted in the painting process.

It is known that paint-coated mounting screws are painted with only one paint coat usually corresponding to the colour of the product to be mounted, and that no actual corrosion prevention criteria have been officially set for the paint coating. It is known that present paint-coated mounting screws do not achieve the same corrosion resistance as the paint-coated metallic sheet product to be mounted.

The corrosion resistance of the sheet metal products to be mounted is at least equivalent to climate stress category C3. Recommended use conforming to the standards and building regulations for paint-coated mounting screws in use is limited to climate stress categories C1 and C2.

It is known that corrosion caused by climate stress is mainly directed at the head and washer of the screw, which are subjected to outside-air stress. The body part of the screw under the sheet structure to be mounted is significantly less subjected to corrosion stress. For this reason, the paint typically covers only the head, the washer and part of the threaded part of the screw.

It is known that according to the present requirements, a stainless (A2 or A4) screw should be used for climate stress categories from C3 onwards (including C3) but due to the high prize, compared to that of a carbon steel screw, it is not used much.

It is known that with respect to corrosion prevention technology, the head coating system used in paint-coated carbon steel mounting screws can be regarded as what is called a duplex coating. When this coating system is manufactured correctly, its life cycle is 1.5 to 2.3 times the sum of the life cycles of the coating parts.

On the basis of the above known facts, present mounting screws have an obvious durability problem. In mountings, a painted carbon steel mounting screw accepted in climate stress category C2 at the most and having corrosion resistance significantly poorer than that of the sheet metal product to be mounted is used in climate stress category C3 (or C4), whereby there is not only a risk of guidelines and regulations to be broken but also a risk of the structures deteriorating prematurely.

The problem has been known for over 20 years and it has not been solved successively so far.

### BRIEF DESCRIPTION OF THE INVENTION

An object of the invention is to provide an improved mounting screw of a novel type and a method for manufacturing a mounting screw.

The mounting screw according to the invention is disclosed in claim 1.

The method for manufacturing a mounting screw according to the invention is disclosed in claim 7.

An idea of the invention is that at least the top layers of the mounting screw, exposed to the weather, comprise a ground coat layer and a top coat layer, whereby the ground coat layer may comprise at least one component that increases corrosion resistance. The component increasing corrosion resistance, i.e. a corrosion-preventive or corrosion-retardant component, retards or prevents reaction of water which has got through the top coat layer and impurities therein with the metal surface. Such components include, for instance, strontium chromate, potassium dichromate and some molybdenum compounds. The efficiency of such a compound may be based on chemical reactions with water and/or on physical prevention of permeation of water.

In addition, the ground coat layer preferably improves the adhesion of the top coat layer. The ground coat component improving the adhesion of paint to the metal surface and/or increasing corrosion resistance may be of organic or inorganic nature. Some chromate compounds, for example, may be mentioned as adhesion-improving components. The adhesion-improving component may be placed not only in the paint but also in the metal surface. Improving adhesion also improves corrosion resistance.

Further, the ground coat layer may contain colouring agents providing colour, for instance pigments. Usually, however, the top coat layer provides the desired shade for the mounting screw.

Both ground coat and top coat may be applied to the mounting screw in one layer each but most preferably they are applied in two or more layers.

The top layers of the mounting screw comprise a pretreatment layer arranged under the lowest ground coat layer. Typically, the screw is treated throughout with said pretreatment layer. The pretreatment layer is a layer formed with conversion treatment, which conversion treatment comprises passivating the surface and providing it with adhesion promoters, such as zinc and chromium compounds or iron, titanium or cobalt compounds. The pretreatment layer may be formed with, for example, chromium-free Gardobond X4744 or a compound used for alkaline passivation: Gardobond X1303 + Gardobond C4504.

The pretreatment layer according to the invention comprises silane as an adhesion promoter. The pretreatment layer increases adhesion in the direction of both the protective layer and the ground coat layer. In addition, it forms an extremely watertight passivation layer. The pretreatment layer may be any layer formed with pretreatment intended for painting a zinc-coated surface. Such pretreatment may be, for instance, chromating treatment, treatment with an acid solution containing metal, alkaline oxidization combined with chromic acid treatment etc.

The cathodic protective layer, for instance a zinc layer or an alloy coating comprising zinc or another element, is arranged as the lowest layer - i.e. directly on the basic body part. Said another element may be, for example, nickel (Ni), aluminium (Al), magnesium (Mg), titanium (Ti) or chromium (Cr).

The mounting screw according to the invention has numerous advantages. Its corrosion resistance is essentially better than that of known painted mounting screws. Several paint coat layers make a clearly better retardant for the permeation of water and oxygen molecules than one layer. Improved adhesion of the ground coat layer and anti-corrosion agents contained in it increase the corrosion resistance. Thus, corrosion resistance equivalent to at least climate stress category C3 is achieved with the mounting screw according to the invention.

A further advantage is that a multilayer coating increases dent resistance of the mounting screw coating, which, in turn, contributes to increasing the life cycle of the mounting screw. Dent resistance is further improved by good adhesion of the coating layers and the paint coat thickness that is greater than before.

A further advantage is that using mounting screws according to the invention decreases maintenance costs caused by mounting screws.

Yet another advantage is that the multilayer coating system of the mounting screw according to the invention improves the service life of the fastening of sheet metal products and improves the operational safety of the whole structure.

An advantage of the method according to the invention is that the method enables manufacturing of a mounting screw which resists corrosion and mounting extremely well.

### BRIEF DESCRIPTION OF THE FIGURES

Some embodiments of the invention are explained in greater detail in the attached drawings, in which
Figure 1 shows schematically a side view of a mounting screw according to the invention;
Figure 2 shows schematically a detail of the cross-sectional structure of the mounting screw of Figure 1 in larger scale and seen directly from the side;
Figure 3 shows schematically a side and cross-sectional view of the mounting screw according to the invention, fastened in place;
Figure 4 shows schematically an arrangement for manufacturing a mounting screw; and
Figure 5 shows schematically a flow chart of a method according to the invention.

For the sake of clarity, embodiments of the invention are shown simplified in the figures. Similar parts are denoted with the same reference numerals in the figures.

### DETAILED DESCRIPTION OF THE INVENTION

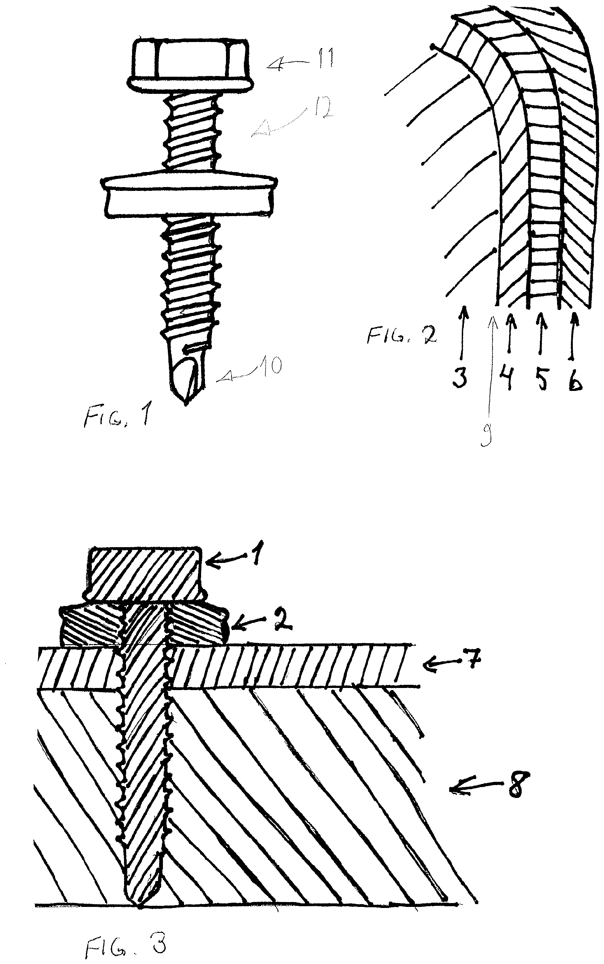

Figure 1 shows schematically a side view of the mounting screw according to the invention, and Figure 2 shows a side view of a detail of the cross-sectional structure of the mounting screw in larger scale.

A sealing washer 2 is attached to a mounting screw 1. In this context, it is to be noted that the mounting screw according to the invention can, of course, be used without the sealing washer 2 - either with another type of washer or completely without a washer.

The mounting screw 1 comprises a point part 10, a head part 11 and a threaded part 12 between them. The point part 10 is, in this case, what is called self-boring but it is obvious that the point part of the mounting screw 1 may be of another kind.

The head part 11 comprises a hexagonal head but instead of it the head part 11 may comprise for example a hex-socket, torx, crosshead or slothead driver or another driver known as such.

The threaded part 12 may have a shape of any known threaded part. However, it is to be noted that the threaded part 12 does not necessarily extend all the way from the point part 10 to the head part 11, in other words there may be an unthreaded part between the threaded part 12 and the head part 10.

Figure 2 shows schematically a detail of the cross-sectional structure of the mounting screw shown in Figure 1 in larger scale and seen directly from the side.

The mounting screw 1 comprises a basic body part 3 made of carbon steel known as such. On its surface, a cathodic protective layer 9 has been formed for instance of zinc.

Upon the protective layer 9, a pretreatment layer 4 has been made, comprising silane as an adhesion promoter. The pretreatment layer 4 comprising silane increases adhesion in the direction of both the protective layer 9 and the ground coat layer 5. In addition, it forms an extremely watertight passivation layer. As described earlier, the pretreatment layer 4 may be any layer formed with pretreatment intended for painting a zinc-coated surface.

Upon the pretreatment layer 4 a ground coat layer 5 has been applied, and upon that a top coat layer 6. Apart from being formed of one paint coat layer, both the ground coat layer and the top coat layer 5, 6 may be formed of several paint coats. The paint coat layers 5, 6 cover at least the head part 11, the possible washer and part of the body part under the head part 11 and/or threaded part 12. Of course, the whole mounting screw may be painted as well.

The ground coat layer 5 comprises, in addition to at least one component increasing corrosion resistance, preferably at least one adhesive component improving the adhesion of the ground coat layer 5 to the metal surface and the top coat layer 6. The adhesion of the ground coat layer 5 and the top coat layer 6 may be promoted for instance by using a ground coat paint that does not become as hard in normal burning as the top coat, whereby the top coat paint adheres to it better.

The surface of the ground coat may remain uneven, whereby its area increases, which, in turn, increases the anchorage area, i.e. adhesion, between the ground coat and the top coat.

Ground coat paints that are applied in liquid form, i.e. wet paints, are usually of polyesters, acryls, alkyds, epoxies, polyurethanes or mixtures of these. The ground coat paint may also be powder paint, in which case it may be of polyesters, epoxies, polyurethanes or mixtures of these, for example.

Top coat paints may be, for example, of polyesters, alkyds, acryls, polyurethanes and polyvinyl fluorides or mixtures of these. What is important is that the ground coat paint and the top coat paint are compatible.

The total layer thickness of the paint coat layers 5, 6 is at least 120 micrometres, preferably at least 60 micrometres. The total layer thickness is typically about 300 micrometres at most. The total layer thickness of the paint coat layers 5, 6 is so great that penetration of water and oxygen through them is significantly retarded.

Figure 3 shows schematically a side and cross-sectional view of a mounting screw according to the invention, fastened in place.

The mounting screw 1 fastens a sheet metal product 7 to a timber batten or joist 8. In place of the timber batten or joist 8 there may naturally be another timber element or surface and/or an element or surface made of another material. The material of the element or surface may be, for example, metal, stone, composite material etc.

The sheet metal product 7 may typically be for instance a roofing sheet, a wall sheet or another product made of metal. The mounting screw 1 may be painted according to the colour of the sheet metal product 7 to be mounted.

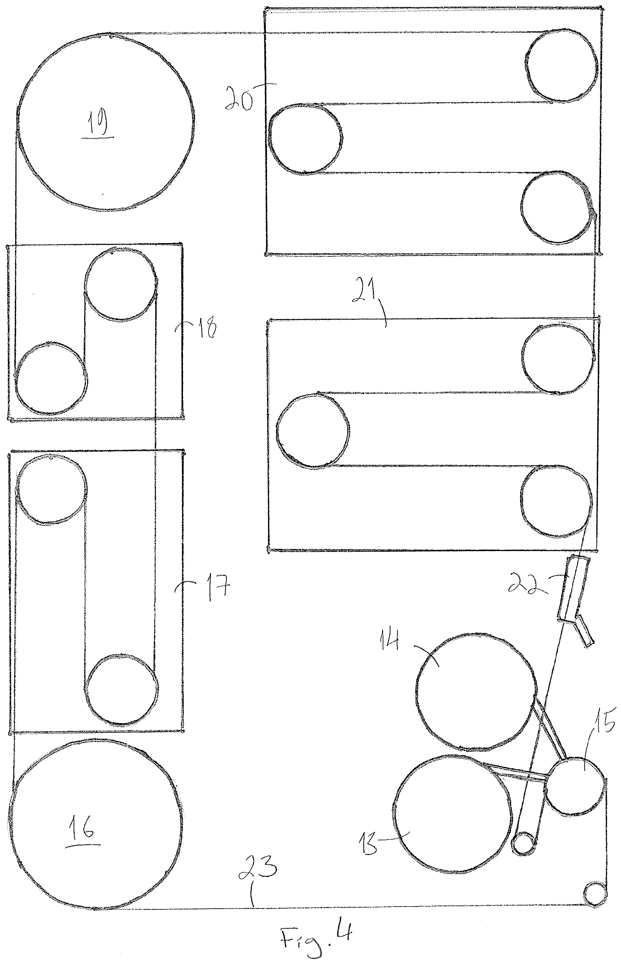

Figure 4 shows schematically an arrangement for manufacturing a mounting screw. The screw preform forming the metallic basic body part 3 of the mounting screw is taken to the arrangement and arranged to be conveyed by a conveyer member 23.

The screw preform comprises a body part 3 and a cathodic protective layer 9 arranged on the surface of the basic body part 3. The cathodic protective layer 9 is typically a zinc layer or a layer comprising zinc, as mentioned earlier in this description. The conveyor member 23 is, in this case, a conveyor chain known as such and it is not presented in greater detail here. It can be mentioned, however, that a typical conveyor chain comprises cylindrical spaces. The screw preform is fed by means of a screw feeding device 13 to a mounting device 15, where it is arranged in a space in the conveyor chain. Before the screw preform is placed in the conveyor means 23, a washer may be arranged therein, being fed to the mounting device 15 from a washer feeding device 14. In such a case, the washer travels through the arrangement along with the screw preform and undergoes the same work stages. Said feeding devices 13, 14 and the mounting device 15 are known as such, so they are not described in greater detail here.

The conveyor member 23 takes the screw preform to a first painting unit 16, which forms the ground coat layer 5 upon the pretreatment layer 4. Creating a sufficiently thick ground coat layer may require repeated painting steps.

The first painting unit 16 may comprise a painting chamber shaped to be at least partly curved, and a gun or several guns dosing powder paint into the painting chamber. The guns may operate with the tribo or corona principles, for example.

In a second embodiment of the invention the ground coat layer is formed by spraying wet paint and in a third embodiment of the invention by immersing the screw preforms in liquid paint.

The ground coat layer 5 may also comprise several coats, for example two, three, four etc. Each of these layers is made in a separate painting unit.

When the ground coat layer 5 has been finished, the screw preform is conveyed into a first heater 17, where the ground coat paint is hardened to a suitable hardness value. The first heater 17 and the hardening of the paint in it are known as such. Next, the screw preforms are cooled in a first cooling unit 18. Here, the temperature of the screw is lowered to a desired level by, for instance, blowing cold air.

The screws are conveyed from the first cooling unit 18 to a second painting unit 19 arranged to form a top coat layer 6 upon the ground coat layer 5. If the top coat layer 6 comprises more than one layer, each layer is formed in a separate painting unit.

It is to be noted that hardening the ground coat layer in a heater is not always necessary, whereby the first heater 17 and the first cooling unit 18 may be left out of the arrangement, and the ground coat does not necessarily have to be hardened before top coating. The ground and top coats may also be subjected to the final hardening at the same time.

A second painting unit 19 and the top coating in it may be based on the same principles as and means similar to what was described above in the context of the ground coat layer. Painting the top coat layer may be implemented with the same technique as or a technique different from that used for the ground coat layer of the mounting screw. In a preferred embodiment of the invention, the ground coating is carried out with a corona gun while the top coating is carried out with a tribo gun. In this way, the ground coat can be made adhere to the sharpish edges, bevels and corners of the screw, whereas the top coat adheres particularly well to the screw surfaces which constitute "blind spots" for the gun.

The finished coated mounting screw may be dried in a second heater 20 known as such or the like to accelerate the hardening of the coating layers. If required, the mounting screws may be cooled in a second cooling unit 21, after which the screws are removed from the conveyor member 23 in a removal device 22 known as such. Subsequently, the screws may be treated further, for example packed.

The temperature of the heaters 17, 21 may be for instance in the range of 180 to 200 °C, the residence time of the screw being 15 to 20 minutes.

The arrangement comprises a first coating unit, such as a zinc-coating unit, which is arranged to form a cathodic protective layer for the metallic basic body part 3 of the mounting screw. In such an arrangement, the screw preform is taken to the first coating before it is taken to the first painting unit.

Precoating may be based on electrolysis or hot dipping, for example, and the first coating unit may comprise for example a rotating cage-like drum unit, where the screw preform is moved and dipped in basins containing liquid treatment agents required by the treatment.

The arrangement also comprises a second coating unit, where the pretreatment layer 4 is formed on the surface of the screw preform and the cathodic protective layer 9.

The second coating unit comprises a silane-coating unit, where a silane coating is made by arranging the screw preforms in a cage-like drum unit, which is dipped and rotated in treatment basins containing required treatment liquids. The treatment liquids are known as such, so they are not described in greater detail in this context. The result is a pretreatment layer 4, which is layer comprising silane.

The first and the second coating unit may be combined with each other in such a way that the screw preform moves in the same conveyer means, such as in said drum unit, through both coating units.

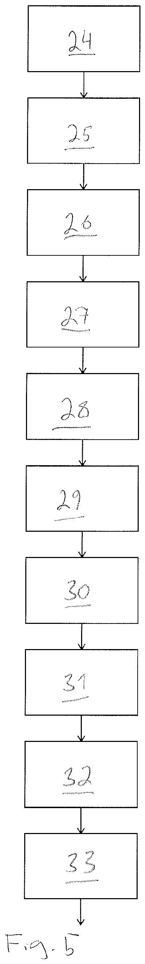

Figure 5 shows schematically a flow chart of the method according to the invention. This embodiment of the method comprises
coating 24 the basic body part of the mounting screw with a cathodic protective layer;
arranging 25 a pretreatment layer over the cathodic protective layer;
arranging 26 a screw preform treated with the cathodic protective layer and the pretreatment layer on a washer and further on a conveyor member;
arranging 27 on the pretreatment layer one or more layers of ground coat paint comprising a corrosion-preventive component;
hardening 28 the ground coat paint in a heater;
cooling 29 the screw preform having heated in the heater;
arranging 30 one or more layers of top coat paint over the ground coat;
hardening 31 the top coat paint in the heater;
cooling 32 the mounting screw having heated in the heater; and
removing 33 the mounting screw from the conveyor member.

The drawings and the related description are only intended to illustrate the invention. Details of the invention may vary within the claims.

## Claims

1. A mounting screw (1) comprising a carbon steel basic body part (3), the mounting screw (1) being at least partly painted,
the mounting screw (1) further comprising a cathodic protective layer (9) arranged on the basic body part (3), **characterized in that**
the mounting screw (1) comprises also two or more paint coat layers (5, 6), of which a first paint coat layer is a ground coat layer (5) comprising a component that increases corrosion resistance, and
a pretreatment layer (4) arranged under the ground coat layer (5), wherein
the pretreatment layer (4) is a passivation layer comprising silane as an adhesion promoter.

2. A mounting screw according to claim 1, **characterized in that** the ground coat layer (5) comprises an adhesive component arranged to give the paint coat applied over it better adhesion to the mounting screw (1).

3. A mounting screw according to any one of the preceding claims, **characterized in that** the pretreatment layer (4) is a chromating layer oran oxide layer formed with alkaline oxidization.

4. A mounting screw according to any one of the preceding claims, **characterized in that** the pretreatment layer (4) is formed with an acid containing metal.

5. A mounting screw according to any one of the preceding claims, **characterized in that** the cathodic protective layer (9) is a layer comprising zinc.

6. A mounting screw according to any one of the preceding claims, **characterized in that** it meets the requirements of climate stress category C3 (SFS-EN-ISO 12944-2).

7. A method for manufacturing a mounting screw, which mounting screw (1) has a basic body part (3) comprising carbon steel, the method comprising:
arranging a cathodic protective layer (9) on the basic body part (3),
arranging a pretreatment layer (4) on the cathodic protective layer (9), wherein the pretreatment layer (4) is a passivation layer comprising silane as an adhesion promoter,
arranging a ground coat layer (5) on at least part of the surface of the pretreatment layer (4), and arranging a top coat layer (6) over the ground coat layer (5).

8. A method according to claim 7, **characterized by** arranging the pretreatment layer (4) by using a chromating method.

9. A method according to claim 7, **characterized by** arranging the pretreatment layer (4) by using alkaline oxidization, which forms an oxidization layer, or with an acid comprising metal.

## Patentansprüche

1. Montageschraube (1), die einen Basiskörperteil (3) aus Kohlenstoffstahl umfasst, wobei die Montageschraube (1) mindestens teilweise lackiert ist,
wobei die Montageschraube (1) ferner eine kathodische Schutzschicht (9) umfasst, die auf dem Basiskörperteil (3) angeordnet ist, **dadurch gekennzeichnet, dass**
die Montageschraube (1) außerdem zwei oder mehr Lackbeschichtungsschichten (5, 6) umfasst, von denen eine erste Lackbeschichtungsschicht eine Grundbeschichtungsschicht (5) ist, die eine Komponente umfasst, die eine Korrosionsbeständigkeit erhöht, und
eine Vorbehandlungsschicht (4), die unter der Grundbeschichtungsschicht (5) angeordnet ist, wobei
die Vorbehandlungsschicht (4) eine Passivierungsschicht ist, die als Haftungsförderer Silan umfasst.

2. Montageschraube nach Anspruch 1, **dadurch gekennzeichnet, dass** die Grundbeschichtungsschicht (5) eine Haftungskomponente umfasst, die angeordnet ist, der Lackbeschichtung, die darauf aufgetragen wird, eine bessere Haftung an der Montageschraube (1) zu vermitteln.

3. Montageschraube nach einem der vorhergehenden Ansprüche, **dadurch gekennzeichnet, dass** die Vorbehandlungsschicht (4) eine Chromatisierungsschicht oder eine Oxidschicht, die mit alkalischer Oxidation gebildet ist, ist.

4. Montageschraube nach einem der vorhergehenden Ansprüche, **dadurch gekennzeichnet, dass** die Vorbehandlungsschicht (4) mit einem Säure enthaltenden Metall gebildet ist.

5. Montageschraube nach einem der vorhergehenden Ansprüche, **dadurch gekennzeichnet, dass** die kathodische Schutzschicht (9) eine Schicht ist, die Zink umfasst.

6. Montageschraube nach einem der vorhergehenden Ansprüche, **dadurch gekennzeichnet, dass** sie die Anforderungen der klimatischen Belastungskategorie C3 (SFS-EN-ISO 12944-2) erfüllt.

7. Verfahren zum Herstellen einer Montageschraube, wobei die Montageschraube (1) einen Basiskörperteil (3) aufweist, der Kohlenstoffstahl umfasst, wobei das Verfahren Folgendes umfasst:
Anordnen einer kathodischen Schutzschicht (9) auf dem Basiskörperteil (3),
Anordnen einer Vorbehandlungsschicht (4) auf der kathodischen Schutzschicht (9), wobei die Vorbehandlungsschicht (4) eine Passivierungsschicht ist, die als Haftungsförderer Silan umfasst,
Anordnen einer Grundbeschichtungsschicht (5) mindestens auf einem Teil der Oberfläche der Vorbehandlungsschicht (4) und Anordnen einer Deckbeschichtungsschicht (6) über der Grundbeschichtungsschicht (5).

8. Verfahren nach Anspruch 7, **gekennzeichnet durch** Anordnen der Vorbehandlungsschicht (4) unter Verwendung eines Chromatisierungsverfahrens.

9. Verfahren nach Anspruch 7, **gekennzeichnet durch** Anordnen der Vorbehandlungsschicht (4) unter Verwendung einer alkalischen Oxidation, die eine Oxidationsschicht bildet, oder mit einem Säure umfassenden Metall.

## Revendications

1. Vis de fixation (1) comprenant une partie de corps de base en acier au carbone (3), la vis de fixation (1) étant au moins partiellement peinte,
la vis de fixation (1) comprenant en outre une couche de protection cathodique (9) agencée sur la partie de corps de base (3), **caractérisée en ce que** :
la vis de montage (1) comprend également deux couches de peinture (5, 6) ou plus, dont chaque couche de peinture est une couche d'impression (5) comprenant un composant qui augmente la résistance à la corrosion, et
une couche de prétraitement (4) agencée sous la couche d'impression (5), dans laquelle :
la couche de prétraitement (4) est une couche de passivation comprenant du silane en tant que promoteur d'adhésion.

2. Vis de fixation selon la revendication 1, **caractérisée en ce que** la couche d'impression (5) comprend un composant adhésif agencé pour donner à la peinture appliquée sur ce dernier une meilleure adhésion à la vis de fixation (1).

3. Vis de fixation selon l'une quelconque des revendications précédentes, **caractérisée en ce que** la couche de prétraitement (4) est une couche de chromatation ou une couche d'oxyde formée avec une oxydation alcaline.

4. Vis de fixation selon l'une quelconque des revendications précédentes, **caractérisée en ce que** la couche de prétraitement (4) est formée avec un métal contenant de l'acide.

5. Vis de fixation selon l'une quelconque des revendications précédentes, **caractérisée en ce que** la couche de protection cathodique (9) est une couche comprenant du zinc.

6. Vis de fixation selon l'une quelconque des revendications précédentes, **caractérisée en ce qu'**elle satisfait les exigences des conditions climatiques difficiles C3 (SFS-EN-ISO 12944-2).

7. Procédé pour fabriquer une vis de fixation, laquelle vis de fixation (1) a une partie de corps de base (3) comprenant de l'acier au carbone, le procédé comprenant les étapes suivantes :
agencer une couche de protection cathodique (9) sur la partie de corps de base (3),
agencer une couche de prétraitement (4) sur la couche de protection cathodique (9),
dans lequel la couche de prétraitement (4) est une couche de passivation comprenant du silane en tant que promoteur d'adhésion,
agencer une couche d'impression (5) sur au moins une partie de la surface de la couche de prétraitement (4) et agencer une couche de finition (6) sur la couche d'impression (5) .

8. Procédé selon la revendication 7, **caractérisé par** l'étape pour agencer la couche de prétraitement (4) en utilisant un procédé de chromatation.

9. Procédé selon la revendication 7, **caractérisé par** l'étape pour agencer la couche de prétraitement (4) en utilisant l'oxydation alcaline, qui forme une couche d'oxydation ou avec un métal comprenant de l'acide.
